# EUROPÄISCHE PATENTANMELDUNG

(11) **EP 2 277 647 A1**
(43) Veröffentlichungstag der Anmeldung: **26.01.2011**
(21) Anmeldenummer: 09405124.0
(22) Anmeldetag: 24.07.2009
(51) Int. Cl.: B23B 45/00, B23B 5/36, H02G 1/00

(54) **Bohrvorrichtung zum Bohren eines Ganges in einer Wand**

(71) Anmelder: Geberit International AG, 8645 Jona (CH)
(72) Erfinder: Weber, Lothar, 8646 Wagen (CH); Lechner, Peter, 8645 Jona (CH)
(74) Vertreter: Groner, Manfred

(57) **Zusammenfassung**

Die Bohrvorrichtung weist ein Werkzeug (14) auf, das an einem vorderen Ende einer biegsamen Welle (13) angeordnet ist, die in einem Führungsrohr (12) gelagert ist. Das Führungsrohr (12) ist an einem Träger (18) verschiebbar gelagert. Der Träger (18) führt das Führungsrohr (12) beim Vortrieb des Werkzeugs (14). Das Werkzeug (14) ist an einem vorderen Ende (12a) des Führungsrohrs (12) in einem Drehlager (16) gelagert, so dass das am Träger (18) gelagerte Führungsrohr (14) zusammen mit dem Werkzeug (14) verschiebbar ist. Die Bohrvorrichtung eignet sich insbesondere zum nachträglichen Herstellen einer Wasserleitung in einer Sanitärinstallation, beispielsweise einem WC mit Unterdusche.

## Beschreibung

Die Erfindung betrifft eine Bohrvorrichtung zum Bohren eines Ganges in einer Wand, mit einem Werkzeug, das an einem vorderen Ende einer biegsamen Welle angeordnet ist, die in einem Führungsrohr gelagert ist und mit einem Träger, an dem das Führungsrohr angeordnet ist und der an einer Aussenseite der Wand befestigbar ist.

Die EP-A-0 148 097 offenbart eine Bohrvorrichtung der genannten Art. Bei dieser ist der Träger mit Saugnäpfen an einer Aussenseite einer Gebäudewand befestigbar. Am Träger ist ein Führungsrohr befestigt, das mit einem vorderen Ende in eine Öffnung der Wand eingeführt wird. Dieses vordere Ende ist gebogen und zum Bohren des Ganges fest mit dem Träger verbunden. Damit das Rohr zum Bohren des Ganges positioniert werden kann, muss somit zuerst in der Wand eine Öffnung hergestellt werden. Im Führungsrohr ist eine angetriebene flexible Welle gelagert, die an einem vorderen Ende ein Bohrwerkzeug trägt. Durch Verschieben der flexiblen Welle kann das Bohrwerkzeug vertikal nach oben bewegt und dadurch ein Gang für eine elektrische Leitung gebohrt werden. Die flexible Welle ist lediglich auf einem vergleichsweise kurzen Abschnitt geführt und dadurch können nur sehr einfache gerade verlaufende Gänge gebohrt werden.

Die DE-A-39 23 609 offenbart eine Winkelantriebsvorrichtung, die ein gebogenes Führungsrohr aufweist, in dem eine flexible Welle aus Segmenten gelagert ist. Am vorderen Ende der Welle ist ein Bohrwerkzeug angebracht, das in einem Drehlager des Führungsrohrs gelagert ist. Mit diesem Werkzeug können in einer Wand gebogene Gänge hergestellt werden.

Der Erfindung liegt die Aufgabe zugrunde, eine Bohrvorrichtung der genannten Art zu schaffen, die es ermöglicht, Gänge in einer Wand mit höherer Präzision und dennoch einfach herzustellen.

Die Aufgabe ist bei einer gattungsgemässen Bohrvorrichtung dadurch gelöst, dass das Führungsrohr am Träger verschiebbar gelagert ist und der Träger das Führungsrohr beim Vortrieb führt. Bei der erfindungsgemässen Bohrvorrichtung kann das Führungsrohr am Träger zusammen mit dem Werkzeug geführt in die Wand vorgetrieben werden. Da das Führungsrohr und mit diesem das Werkzeug am Träger beim Vortrieb geführt ist, können sehr exakte Gänge hergestellt werden. Insbesondere können hierbei Gänge für einen Wandleitungskanal hergestellt werden, der an einer vorbestimmten Stelle in die Wand eintritt und an einer bestimmten Stelle an der Wand austritt. Beispielsweise kann nachträglich an einer Sanitärinstallation ein nachträglicher Wandleitungskanal hergestellt werden. Beispielsweise kann ein solcher Wandleitungskanal hergestellt werden, der bei einem bereits installierten WC die Unterdusche mit einem Wasserventil im Spülkasten verbindet. Mit den bisherigen Bohrwerkzeugen war dies nicht möglich.

Nach einer Weiterbildung der Erfindung ist vorgesehen, dass das Werkzeug an einem vorderen Ende des Führungsrohrs in einem am Führungsrohr befestigten Drehlager gelagert ist und das Führungsrohr zusammen mit dem Werkzeug verschiebbar ist. Das Werkzeug ist damit fest mit dem vorderen Ende des Führungsrohrs verbunden und während des Vortriebs immer genau positioniert. Damit kann ein Gang mit einer besonders hohen Präzision hergestellt werden.

Nach einer Weiterbildung der Erfindung ist vorgesehen, dass das Führungsrohr kreisbogenförmig gebogen ist. Dadurch ist es möglich, auch vergleichsweise lange Gänge herzustellen, die an einer vorbestimmten Stelle aus der Wand hinausführen. Der Gang kann insbesondere so gebohrt werden, dass er in einer Ebene verläuft, die bezüglich der Aussenseite der Wand geneigt verläuft.

Nach einer Weiterbildung der Erfindung ist vorgesehen, dass das Führungsrohr im Wesentlichen etwa halbkreisförmig ausgebildet ist. Ein solches Führungsrohr ist besonders zum Herstellen nachträglicher Wandleitungskanäle für Sanitärinstallationen geeignet. Dies insbesondere dann, wenn an einer definierten Stelle der Gang aus der Wand austreten soll. Insbesondere ist es mit der erfindungsgemässen Bohrvorrichtung möglich, bei einer bereits bestehenden Sanitärinstallation eine Unterdusche anzuschliessen. Der Gang beginnt hier beispielsweise im Bereich einer Revisionsöffnung und endet unterhalb des Spülkastens. Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Fig. 1: Schematisch eine räumliche Ansicht einer Sanitärinstallation mit einer montierten erfindungsgemässen Bohrvorrichtung,
- Fig. 2: eine Ansicht der erfindungsgemässen Bohrvorrichtung,
- Fig. 3: eine Ansicht des vorderen Endes des Führungsrohrs,
- Fig. 4: eine weitere Ansicht der erfindungsgemässen Bohrvorrichtung, wobei der vorgesehene Gang gebohrt ist und
- Fig. 5: eine Seitenansicht der erfindungsgemässen Bohrvorrichtung.

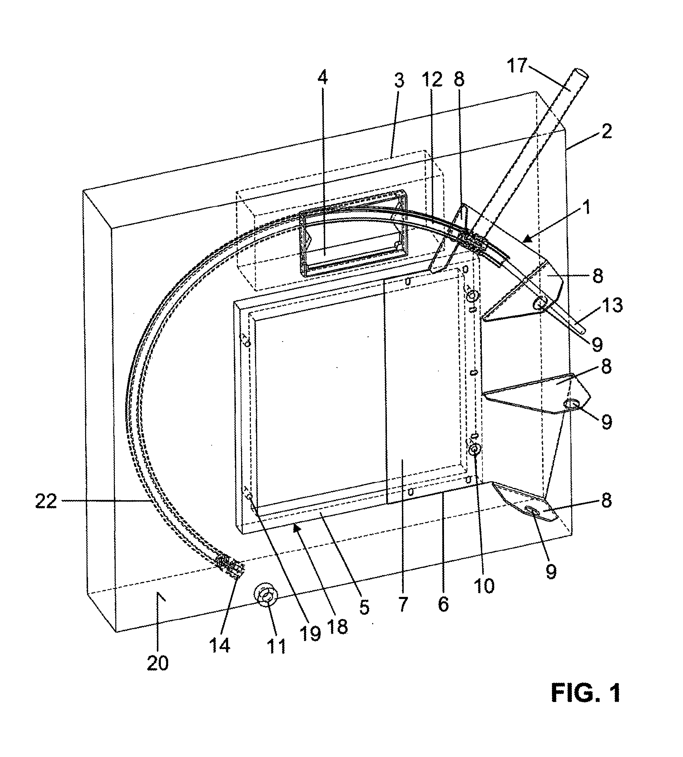

Die Fig. 1 zeigt eine Wand 2 mit einer Aussenseite 20, auf welcher die Bohrvorrichtung 1 befestigt ist. In der Wand 2 ist ein hier lediglich angedeuteter Spülkasten 3 installiert. Der Spülkasten 3 ist hier beispielsweise ein üblicher Unterputzspülkasten mit einer Revisionsöffnung 4. Durch diese Revisionsöffnung 4 sind die Armaturen des Spülkastens 3 zugänglich. Diese Armaturen sind hier nicht gezeigt und umfassen üblicherweise ein Anschlussventil, eine Einlaufarmatur und eine Ablaufarmatur. Die Wand 2 kann eine übliche Gebäudewand, ein Installationsblock oder eine Leichtbauwand oder dergleichen sein.

Die Bohrvorrichtung 1 besitzt einen Träger 18, der ein rahmenförmiges Befestigungselement 5 und ein plattenförmiges Führungselement 6 aufweist. Das Befestigungselement 5 besitzt mehrere Befestigungslöcher 19 zum Befestigen des Befestigungselements 5 an der Aussenseite 20 der Wand 2. Zur Befestigung werden beispielsweise hier nicht gezeigte Dübelschrauben verwendet. Das Befestigungselement 5 ist vergleichsweise steif und beispielsweise aus Blech hergestellt. Das Führungselement 6 ist mit Befestigungsmittel 10, beispielsweise mit Schrauben auf dem Befestigungselement 5 befestigt. Das Befestigungselement 5 besteht im Wesentlichen aus einer Platte 7 und von dieser etwa rechtwinklig abgekröpften Führungsteilen 8, die Laschen bilden. Diese Führungsteile 8 besitzen jeweils eine durchgehende Öffnung 9. Das Führungselement 6 ist vorzugsweise lösbar mit dem Befestigungselement 5 verbunden. Die Verbindung zwischen dem Befestigungselement 5 und dem Führungselement 6 kann zudem verschiebbar sein, so dass das Führungselement 6 bezüglich des Befestigungselements 5 verstellbar ist. Das Führungselement 6 kann ebenfalls aus Blech hergestellt sein.

Weiter umfasst die Bohrvorrichtung 1 ein Führungsrohr 12, das wie ersichtlich kreisbogenförmig ausgebildet ist. Das Führungsrohr 12 bildet insbesondere einen Halbkreis. Das Führungsrohr 12 besitzt ein vorderes distales Ende 12a und ein hinteres proximales Ende 12b. Zwischen diesen Enden läuft ein Kanal 12c, der eine hintere Öffnung 12d mit einer vorderen Öffnung 12e verbindet. In diesem Kanal 12c ist eine biegbare Welle 13 gelagert, an welcher ein Werkzeug 14 befestigt ist, das insbesondere ein Bohrwerkzeug ist. Es sind auch andere Werkzeuge denkbar, die zum Herstellen eines Ganges geeignet sind. Das Bohrwerkzeug 14 kann unterschiedlich ausgebildet sein, je nachdem aus welchem Material die Wand 2 hergestellt ist. Solche Werkzeuge sind dem Fachmann gut bekannt und brauchen hier nicht weiter erläutert zu werden. Das Werkzeug 14 ist rotierbar in einem Lager 16 gelagert, das am vorderen Ende 12a des Führungsrohrs 12 befestigt ist. Das Lager 16 kann lösbar mit dem Führungsrohr 12 verbunden sein. Das Werkzeug 14 ist somit drehbar und mit einer vorbestimmten Ausrichtung am vorderen Ende 12a des Führungsrohrs 12 mit diesem verbunden.

Am Führungsrohr 12 ist ein Handgriff 17 befestigt, der etwa radial vom Führungsrohr 12 absteht. Der Handgriff 12 ist mit einem Halter 21 verschiebbar am Führungsrohr 12 befestigt. Die Position des Handgriffs 12 kann somit entlang des Führungsrohrs 12 verschoben werden.

Die flexible Welle 13 ragt an der Öffnung 12d aus dem Führungsrohr 12 hinaus und ist am freien Ende mit einem hier nicht gezeigten Drehantrieb verbunden. Dieser Drehantrieb ist beispielsweise mit einem Motor versehen, mit dem die flexible Welle 13 drehbar ist. Entsprechend wird mit der Welle 13 das Werkzeug 14 gedreht. Denkbar ist grundsätzlich auch ein Handantrieb.

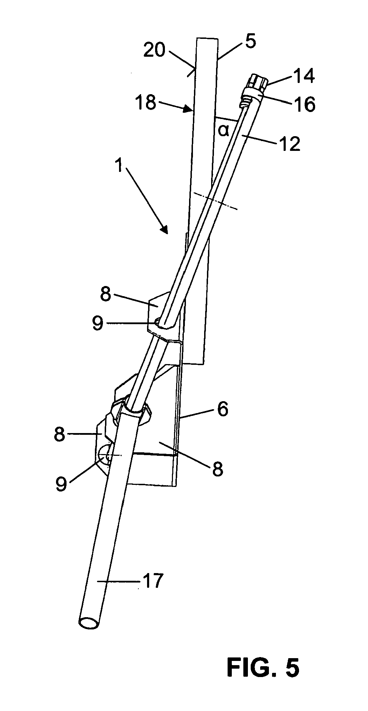

Das Führungsrohr 12 ist an den Führungsteilen 8 verschiebbar gelagert und durchgreift die Öffnungen 9. Diese Öffnungen 9 besitzen unterschiedliche Abstände zur Aussenseite 20. Diese Abstände sind so gewählt, dass das Führungsrohr 12 gemäss der Fig. 5 zur Aussenseite 20 der Wand 2 einen Winkel α einnimmt. Wie die Fig. 5 zeigt, ist dieser Winkel α ein spitzer Winkel. Es sind hier aber auch grundsätzlich andere Winkel denkbar. Das Führungsrohr 12 nimmt in allen möglichen Positionen diesen Winkel α ein. Beim Bohren eines Ganges 22, ist somit dieser Winkel α konstant. Ein gebohrter Gang 22 liegt in einer Ebene, die zur Aussenseite 20 geneigt ist.

Nachfolgend wird das Bohren des Ganges 22 näher erläutert.

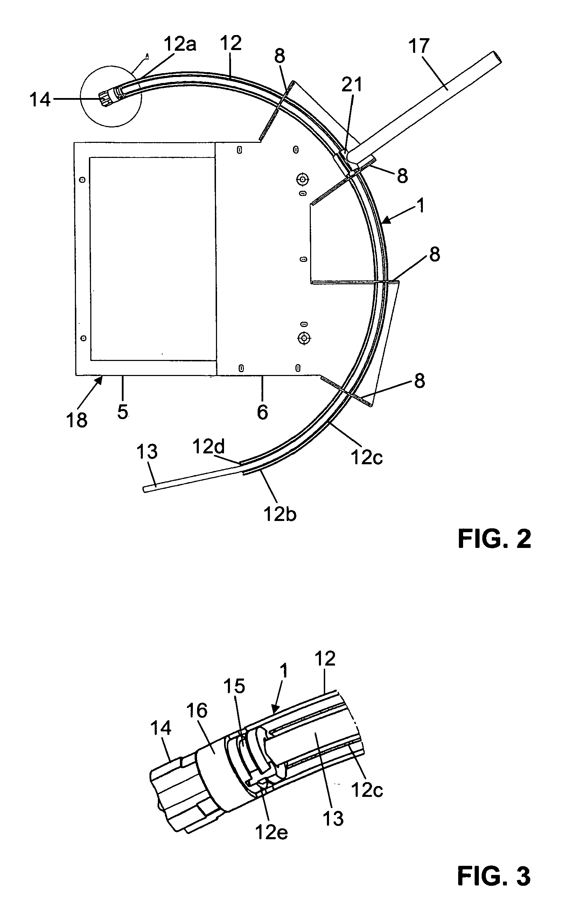

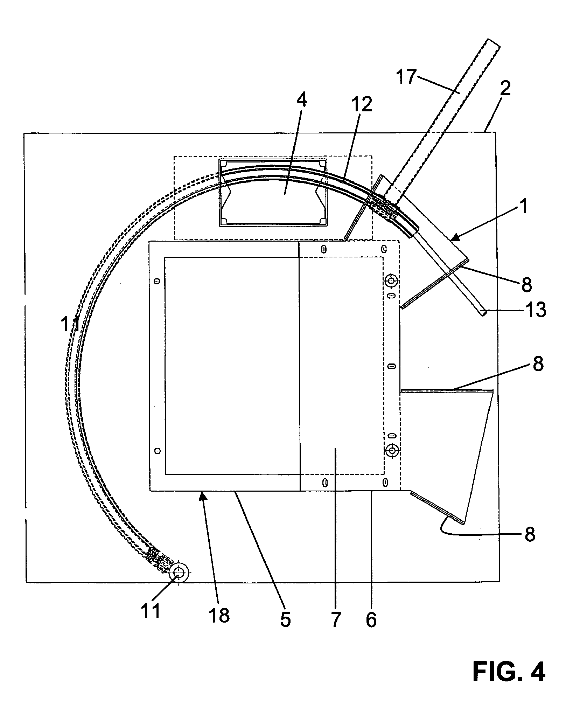

Um in der Wand 2 den Gang 22 zu bohren, wird das Führungsrohr 12 am Handgriff 17 in der Fig. 2 im Gegenuhrzeigersinn verschoben. Das Führungsrohr 12 bewegt sich hierbei in einer durch den Träger 18 gegebenen Ebene um einen Mittelpunkt. Das angetriebene Werkzeug 14 trifft dann an der vorgesehenen Stelle auf die Aussenseite 20 und bohrt sich in die Wand 2, wodurch die Eingangsöffnung des Ganges 22 entsteht. Bei der vorliegenden Verwendung des Bohrwerkzeuges 1 zum nachträglichen Herstellen eines Wandleitungskanals, trifft das Werkzeug 14 neben der Revisionsöffnung 4 in die Wand 2 ein. Das Führungsrohr 12 wird somit zunächst in den Innenraum des Spülkastens 3 eingeführt und verlässt diesen dann wieder, wie die Fig. 1 erkennen lässt. Am Handgriff 17 wird das Führungsrohr 12 verschoben, bis das Werkzeug 14 ein Durchführungsteil 11 erreicht hat. Dies ist bei der in Fig. 4 gezeigten Position des Führungsrohrs 2 erreicht. Das Führungsrohr 12 ist hier nun lediglich noch am letzten Führungsteil 8 gelagert und der Handgriff 17 befindet sich unmittelbar vor diesem Führungsteil 8. Das Führungsrohr 12 kann nun mit dem Werkzeug 12 wieder aus der Wand 2 herausgezogen werden, wobei das Führungsrohr 12 in der Fig. 4 im Uhrzeigersinn verschwenkt wird. Durch den Gang kann nun eine flexible Wasserleitung montiert werden. Diese Wasserleitung führt durch den Durchführungsteil 11 aus der Wand 2 hinaus und kann eine Unterdusche eines hier nicht gezeigten Wasserklosetts mit einem im Spülkasten 3 angeordneten Wasserventil verbinden. Der Träger 18 wird dann selbstverständlich wieder entfernt und kann zum Herstellen eines weiteren Ganges an einer anderen Sanitärinstallation wiederverwendet werden.

### BEZUGSZEICHENLISTE

- 1: Bohrvorrichtung
- 2: Wand
- 3: Spülkasten
- 4: Revisionsöffnung
- 5: Befestigungselement
- 6: Führungselement
- 7: Platte
- 8: Führungsteil
- 9: Öffnung
- 10: Befestigungsmittel
- 11: Durchführungsteil
- 12: Führungsrohr
- 12a: Vorderes Ende
- 12b: Hinteres Ende
- 12c: Kanal
- 12d: Öffnung (hinten)
- 12e: Öffnung (vom)
- 13: Welle
- 14: Werkzeug
- 15: Kupplung
- 16: Lager
- 17: Handgriff
- 18: Träger
- 19: Befestigungsloch
- 20: Aussenseite
- 21: Halter
- 22: Gang

## Patentansprüche

1. Bohrvorrichtung zum Bohren eines Ganges (22) in einer Wand (2), mit einem Werkzeug (14), das an einem vorderen Ende einer biegsamen Welle (13) angeordnet ist, die in einem Führungsrohr (12) gelagert ist und mit einem Träger (18), an dem das Führungsrohr (12) angeordnet ist und der an einer Aussenseite (20) der Wand (2) befestigbar ist, **dadurch gekennzeichnet, dass** das Führungsrohr (12) am Träger (18) verschiebbar gelagert ist und der Träger (18) das Führungsrohr (12) beim Vortrieb führt.

2. Bohrvorrichtung nach Anspruch 1, **dadurch gekennzeichnet, dass** das Werkzeug (14) an einem vorderen Ende (12a) des Führungsrohrs (12) in einem am Führungsrohr (12) befestigten Drehlager (16) aufweist und das Führungsrohr (12) zusammen mit dem Werkzeug (14) verschiebbar ist.

3. Bohrvorrichtung nach Anspruch 2, **dadurch gekennzeichnet, dass** das Führungsrohr (12) kreisbogenförmig gebogen ist.

4. Bohrvorrichtung nach Anspruch 3, **dadurch gekennzeichnet, dass** das Führungsrohr (12) etwa halbkreisförmig ausgebildet ist.

5. Bohrvorrichtung nach einem der Ansprüche 1 bis 4, **dadurch gekennzeichnet, dass** der Träger (18) ein Befestigungselement (5) und ein an diesem angebrachtes Führungselement (6) aufweist.

6. Bohrvorrichtung nach Anspruch 5, **dadurch gekennzeichnet, dass** das Befestigungselement (5) rahmenförmig ausgebildet ist.

7. Bohrvorrichtung nach Anspruch 5 oder 6, **dadurch gekennzeichnet, dass** das Führungselement (6) wenigstens zwei Führungsteile (8) aufweist, die im Abstand zueinander angeordnet sind und an denen das Führungsrohr (12) verschiebbar gelagert ist.

8. Bohrvorrichtung nach Anspruch 7, **dadurch gekennzeichnet, dass** die Führungsteile (8) jeweils eine Öffnung (9) aufweisen, in denen das Führungsrohr (12) verschiebbar gelagert ist.

9. Bohrvorrichtung nach einem der Ansprüche 1 bis 8, **dadurch gekennzeichnet, dass** am Führungsrohr (12) ein Handgriff (17) angebracht ist, der längs des Führungsrohres (12) verschiebbar ist.

10. Bohrvorrichtung nach einem der Ansprüche 1 bis 9, **dadurch gekennzeichnet, dass** sie zum Bohren eines Ganges (22) in einer Sanitärinstallation (3) vorgesehen ist.

11. Bohrvorrichtung nach Anspruch 10, **dadurch gekennzeichnet, dass** die Sanitärinstallation einen in der Wand (2) gelagerten Spülkasten (3) aufweist und dass mit der Bohrvorrichtung (1) ein Gang (22) für eine Wasserleitung herstellbar ist.

12. Bohrvorrichtung nach Anspruch 11, **dadurch gekennzeichnet, dass** die Sanitärinstallation ein WC mit einer Unterdusche aufweist und dass mit der Bohrvorrichtung ein Gang (22) für eine Wasserleitung herstellbar ist, welche ein Wasserventil mit der Unterdusche verbindet.

13. Bohrvorrichtung nach Anspruch 11 oder 12, **dadurch gekennzeichnet, dass** mit der Bohrvorrichtung ein Gang (22) herstellbar ist, der im Wesentlichen im Bereich einer Revisionsöffnung (4) des Spülkastens (3) beginnt und der unterhalb des Spülkastens (3) aus der Wand (2) hinausführt.

14. Bohrvorrichtung nach einem der Ansprüche 1 bis 13, **dadurch gekennzeichnet, dass** der Träger (18) das Führungsrohr (12) beim Vortrieb in einem im Wesentlichen konstanten Winkeln (α) zur Aussenseite (20) führt.

15. Bohrvorrichtung nach Anspruch 14, **dadurch gekennzeichnet, dass** der genannten Winkel (α) ein spitzer Winkel ist.
